(19) Europäisches Patentamt
European Patent Office
Office européen des brevets

(11) **EP 2 937 297 A1**

(12) **EUROPEAN PATENT APPLICATION**
published in accordance with Art. 153(4) EPC

(43) Date of publication:
28.10.2015 Bulletin 2015/44

(21) Application number: 13864923.1

(22) Date of filing: 13.12.2013

(51) Int Cl.:
**B65D 90/10** (2006.01)      **B65D 88/06** (2006.01)
**F17C 13/02** (2006.01)

(86) International application number:
**PCT/JP2013/083418**

(87) International publication number:
**WO 2014/097974 (26.06.2014 Gazette 2014/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.12.2012   JP 2012276563**

(71) Applicant: **Kawasaki Jukogyo Kabushiki Kaisha
Kobe-shi, Hyogo 650-8670 (JP)**

(72) Inventors:
• **SHINGO, Masashi
Akashi-shi
Hyogo 673-8666 (JP)**

• **IZUMI, Naruyoshi
Akashi-shi
Hyogo 673-8666 (JP)**
• **MURAKAMI, Asako
Kobe-shi
Hyogo 650-8670 (JP)**
• **YOSHIDA, Takumi
Kobe-shi
Hyogo 650-8670 (JP)**

(74) Representative: **Jeffrey, Philip Michael
Dehns
St Bride's House
10 Salisbury Square
London
EC4Y 8JD (GB)**

(54)   **TRANSPORT CONTAINER FOR LIQUEFIED GAS**

(57)   A transport container for liquefied gas has a double-wall structure, having an inner shell (101) for accommodating liquefied gas (1) of a lower boiling point than air condensation temperature, and an outer shell (102) that encloses the inner shell, an area (103) between the inner and outer shells being vacuum-insulated. The transport container has a submerged pump (104) for discharging liquefied gas and a manhole (140) for maintenance and inspection of the submerged pump, and the manhole has an inner shell manhole (110) communicating with the inner shell, an outer shell manhole (120) enclosing the outer side of the inner shell manhole and being attached to the outer shell, and a shielding member (130) for separating the area between the inner and outer shells and outside air and suppressing heat input from the outer shell manhole to the inner shell manhole, the shielding member being placed between an inner shell manhole trunk (111) and an outer shell manhole trunk (121).

Fig. 2

**Description**

TECHNICAL FIELD

The present invention relates to a transport container for a liquefied gas, and more particularly to a transport container for a liquefied gas used for marine transport of the liquefied gas.

BACKGROUND ART

As a liquefied gas tank mounted on a liquefied gas carrying vessel which performs marine transport of, for example, an LNG (liquefied natural gas) in a stored state, that is, as a so-called cargo tank, there has been known a liquefied gas tank which includes: a tank body part having a laterally elongated cylindrical barrel portion and lids having an approximately semispherical shape which close both end portions of the barrel portion respectively; and a tank dome mounted on an upper portion of the tank body part. A plurality of pipes and the like are mounted on the tank dome for supplying the liquefied gas into the tank body part and for discharging the liquefied gas from the tank body part. An upper side opening portion of the tank dome is closed by a lid having an approximately semispherical shape.

A heat insulating member is mounted on an outer surface of the liquefied gas tank so as to prevent the intrusion of heat of outside air into the liquefied gas tank. A tank cover formed of a part of a hull is also arranged over the heat insulating member with a gap formed therebetween, and the tank dome projects from the tank cover. In the liquefied gas tank having such structure, the tank dome is displaced with respect to the tank cover due to thermal expansion or thermal shrinkage of the tank body part and hence, an expansion rubber part is provided between the tank dome and the tank cover for absorbing the displacement (see Patent Document 1, for example).

PRIOR ART DOCUMENTS

PATENT DOCUMENTS

Patent Document 1: Japanese Patent Laid-open Publication No. JP 2012-183864 (Fig. 17 to Fig. 19)

SUMMARY OF THE INVENTION

PROBLEMS TO BE SOLVED BY THE INVENTION

With respect to the tank which stores the LNG as the liquefied gas, a liquefying temperature of the LNG is relatively high, that is, -160°C and hence, the above-mentioned structure where the tank storing an LNG is covered by the heat insulating member is sufficient to cope with the thermal insulation. On the other hand, with respect to a tank which stores a liquefied gas having a lower liquefying temperature than the LNG such as liquefied hydrogen, for example, it is necessary for the tank to adopt the more sophisticated heat shielding structure. However, a liquefied gas tank storing a liquefied gas such as liquefied hydrogen, mounted on the liquefied gas carrying vessel, and having the more sophisticated heat shielding structure has not yet existed conventionally.

It is an object of the present invention to provide a transport container for a liquefied gas mounted on a liquefied gas carrying vessel and storing a liquefied gas having a boiling point lower than a condensing temperature of air therein.

SOLUTIONS TO THE PROBLEMS

To achieve the above-mentioned object, the present invention is configured as follows.

That is, a transport container for a liquefied gas according to one aspect of the present invention is a transport container for a liquefied gas mounted on a liquefied gas carrying vessel and storing the liquefied gas having a boiling point lower than a condensing temperature of air therein, the transport container for a liquefied gas comprising: an inner shell configured to store the liquefied gas therein; an outer shell configured to surround the inner shell; an inner-and-outer shells inter-space region configured to constitute a vacuum heat insulation layer formed between the inner shell and the outer shell; a submerged pump fixed to a bottom portion within the inner shell in a vertical direction and configured to discharge the liquefied gas to the outside of the outer shell; and a manhole for maintenance and inspection of the submerged pump, the manhole mounted on an upper portion of the transport container for a liquefied gas in the vertical direction, and configured to make the outside of the outer shell and the inside of the inner shell communicate with each other.

EFFECTS OF THE INVENTION

According to one aspect of the present invention, there can be provided the transport container for liquefied gas storing the liquefied gas having the boiling point lower than the condensing temperature of air therein. The transport container for a liquefied gas has the double shell structure formed of the inner shell and the outer shell, the inner-and-outer shells inter-space region is thermally insulated by vacuum, and the manhole for the submerged pump is mounted on the transport container.

BRIEF DESCRIPTION OF THE DRAWINGS

Fig. 1 is a cross-sectional view showing a schematic constitution of a transport container for a liquefied gas according to an embodiment.
Fig. 2 is a cross-sectional view showing one example of a manhole portion of the transport container for a liquefied gas shown in Fig. 1.
Fig. 3 is a cross-sectional view showing another example of the manhole portion of the transport container for a liquefied gas shown in Fig. 1.

EMBODIMENTS OF THE INVENTION

Hereinafter, a transport container for a liquefied gas according to an embodiment is described by reference to drawings. In the respective drawings, identical or similar constitutional parts are given the same symbols. To avoid the following descriptions from being unnecessarily redundant thus allowing those who are skilled in the art to easily understand them, the detailed description with respect to matters which have been already well-known and the repeated description with respect to the substantially same constitutions may be omitted. The following descriptions and attached drawings are not intended to restrict the subject matters described in Claims.

As the transport container for a liquefied gas of the embodiment described hereinafter, a transport container for a liquefied gas mounted on a liquefied gas carrying vessel for domestic sea routes which carries a liquefied gas carried from a foreign country to ports in Japan is taken as an example. However, it is not intended that the transport container for a liquefied gas is limited to such the container.

Firstly, the background of development of the transport container for a liquefied gas according to this embodiment is described.

In the case of transporting the LNG, with respect to a transport container for a liquefied gas mounted on a liquefied gas carrying vessel, heat input to the LNG from the outside is suppressed by wrapping a heat insulation material on an outer surface of a single shell tank in which the LNG is stored. It is mandatory by law to position a discharge port through which a liquefied gas is discharged from the tank at a place higher than a deck and hence, mounting of the discharge port on a bottom portion of the tank is not allowed, for example. Accordingly, it is necessary to mount a pump (submerged pump) on the bottom portion of the tank, which takes out the liquefied gas from the inside of the tank by pushing up the liquefied gas from the tank when unloading of the liquefied gas. On the other hand, it is mandatory by law to perform the maintenance and inspection of the submerged pump for every fixed period. To comply with such regulation, a manhole which allows an operator to go in and out from the tank is mounted on an upper portion of the tank.

In such tank, when a liquefied gas to be transported by the tank is the LNG (liquefying temperature: -160°C), the heat insulation material which shields heat input to the tank is made of, for example, urethane, phenolic foam or the like which contains air layers. Further, the heat insulation material is cooled by liquid nitrogen.

On the other hand, in a case where a liquefied gas to be transported is liquefied hydrogen (liquefying temperature: -250°C), a boiling point of liquefied hydrogen is lower than a condensing temperature of air and hence, when the above-mentioned heat insulation material is used, the air contained in the heat insulation material is changed into a liquid form and, then, is changed into a solid form. Accordingly, the heat insulation material which contains air completely loses a heat insulation effect. In view of such circumstances, there arises a necessity of forming a transport container into a double shell container constituted of an inner shell and an outer shell and adopting a vacuum heat insulation structure where a vacuum is created in a gap formed between the inner shell and the outer shell.

A transport container for a liquefied gas mounted on a liquefied gas carrying vessel, which has the above vacuum heat insulation structure and includes the submerged pump and the manhole for the submerged pump as described above, has not existed conventionally. The transport container for a liquefied gas in this embodiment is the transport container satisfying such specification.

The transport container for a liquefied gas is configured such that the container includes a cylindrical barrel portion, and both end portions of the barrel portion are closed by lids having an approximately semispherical shape respectively. As one example of outer sizes of the transport container for a liquefied gas, the transport container has a diameter of approximately 10 m and a length of approximately 25 m. Due to the restriction imposed on the manufacture brought about by such sizes, a gap formed between the inner shell and the outer shell is required to have a certain amount of width for providing the vacuum heat insulation structure. As a result, a volume of an inner-and-outer shells inter-space region, that is, a volume of the gap formed between the inner shell and the outer shell, becomes several hundreds cubic meter ($m^3$). Accordingly, approximately one year is necessary to create a vacuum state providing the vacuum heat insulation in the inner-and-outer shells inter-space region with such a large volume.

In view of the above, if the vacuum state created in the inner-and-outer shells inter-space region is to be opened to outside air each time the previously-mentioned inspection of the submerged pump stipulated by the regulation is performed, the container cannot be practically used as a transport container for a liquefied gas.

To prevent the vacuum heat insulation region from having a large volume, a technique is considered where a volume to be opened to outside air is decreased by dividing the inner-and-outer shells inter-space region into a plurality of spaces. This technique, however, increases the number of metal contacts which are provided between the inner shell and the outer shell as zoning members, so that an amount of input heat to the tank by heat conduction is increased. There also arises a drawback that it is necessary to take into account for buffering a stress caused by a thermal shrinkage at fixing points of the metal contacts.

The transport container for a liquefied gas of this embodiment has been developed in view of the above-mentioned background. The transport container for a liquefied gas of this embodiment is a transport container having the manhole structure where while maintaining the vacuum state created in the inner-and-outer shells inter-space region, a volume of a vacuum region which is opened in the work for performing the legal maintenance and inspection of the submerged pump disposed in the inside of the transport container for a liquefied gas is minimized, and heat input to the inner shell can be suppressed as much as possible.

The transport container for a liquefied gas according to this embodiment having such constitution is described in detail hereinafter.

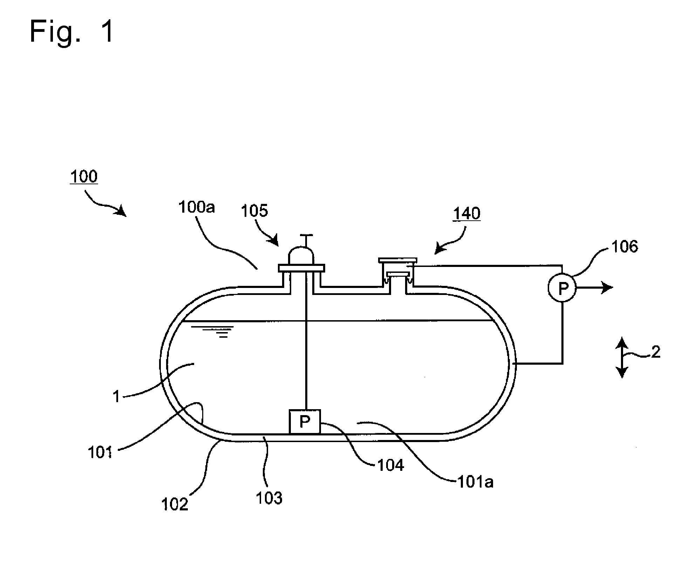

Fig. 1 shows a schematic structure of a transport container for a liquefied gas 100 of this embodiment. The transport container for a liquefied gas 100 is a container mounted on a liquefied gas carrying vessel and storing a liquefied gas 1 having a boiling point lower than a condensing temperature of air therein. In this embodiment, liquefied hydrogen is taken as an example of the liquefied gas 1.

The transport container for a liquefied gas 100 includes: an inner shell 101 which stores the liquefied gas 1 therein; and an outer shell 102 which surrounds the inner shell 101. The transport container for a liquefied gas 100 adopts the vacuum heat insulation structure where an inner-and-outer shells inter-space region 103 sandwiched between the inner shell 101 and the outer shell 102 is formed into a vacuum heat insulation layer. The inner shell 101 is supported in the inside of the outer shell 102 by way of suspended rods or the like disposed in the inside of the outer shell 102. Air in the inner-and-outer shells inter-space region 103 is evacuated by a vacuum pump 106 disposed outside the outer shell 102.

The inner shell 101 is configured such that the inner shell 101 includes a cylindrical barrel portion, and both end portions of the barrel portion are closed by lids having an approximately semispherical shape respectively. The outer shell 102 surrounds the inner shell 101, and has the substantially same configuration as the inner shell 101. With respect to sizes of the transport container for a liquefied gas 100, as one example of outer sizes of the outer shell 102, the outer shell 102 has a diameter of approximately 10 m and a length of approximately 25 m.

A submerged pump 104 for handing the liquefied gas 1 is mounted on a bottom portion 101a in the inside of the inner shell 101 in the vertical direction 2. A tank dome 105 which constitutes a connecting portion between a pipe or the like connected to the submerged pump 104 and a machine or the like for handling the liquefied gas 1, and a manhole 140 described below in detail are mounted on an upper portion 100a of the transport container for a liquefied gas 100 in the vertical direction 2.

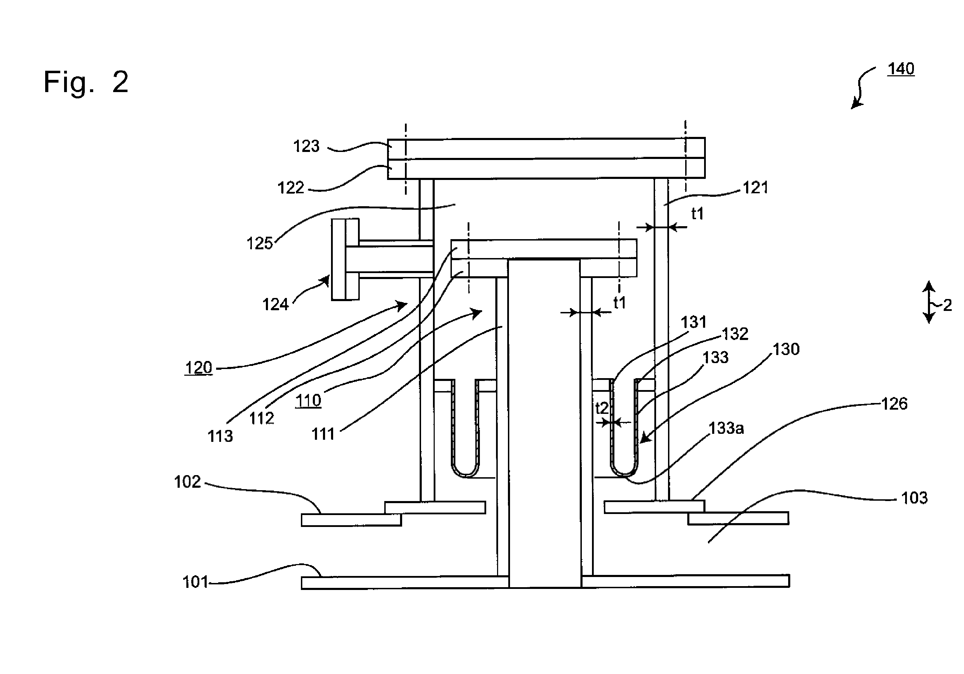

The manhole 140 constitutes an exit and entrance port through which the outside of the outer shell 102 and the inside of the inner shell 101 are communicated with each other. As described above, the manhole 140 is a portion through which an operator goes in and out from the inner shell 101 in the work for performing the legal maintenance and inspection of the submerged pump 104. As shown in Fig. 2, the manhole 140 includes: an inner shell manhole 110 mounted on the inner shell 101; an outer shell manhole 120 mounted on the outer shell 102 in a state where the outer shell manhole 120 surrounds an outer side of the inner shell manhole 110; and a shielding member 130.

The inner shell manhole 110 is constituted of: a cylindrical inner shell manhole barrel portion 111 which is mounted on an upper portion of the inner shell 101 in an erected manner and through which the operator can goes in and out from the inner shell 101; a flange 112 which is welded to an upper end of the inner shell manhole barrel portion 111; and a blind plate 113 which is detachably mounted on the flange 112 by means of bolts. The exit and entrance port of the inner shell manhole barrel portion 111 is usually closed by the blind plate 113, and the blind plate 113 is removed only when it is necessary to perform the maintenance and inspection of the submerged pump 104.

The outer shell manhole 120 includes: a cylindrical outer shell manhole barrel portion 121 which is mounted on an upper portion of the outer shell 102 in an erected manner; a flange 122 which is welded to an upper end portion of the outer shell manhole barrel portion 121; a blind plate 123 which is detachably mounted on the flange 122 by means of bolts; and a vacuum port 124 which constitutes a connecting portion connected with the vacuum pump 106. As described above, the outer shell manhole 120 surrounds an outer side of the inner shell manhole 110 and hence, all members of the inner shell manhole 110 including the blind plate 113 are positioned inside the outer shell manhole barrel portion 121. The exit and entrance port of the outer shell manhole barrel portion 121 is also usually closed by the blind plate 123 of the outer shell manhole 120, and the blind plate 123 is removed only when it is necessary to perform the maintenance and inspection of the submerged pump 104.

The shielding member 130 is a flexible member having the following configuration. That is, the shielding member 130 is disposed between an outer surface of the inner shell manhole barrel portion 111 of the inner shell manhole 110 and an inner surface of the outer shell manhole barrel portion 121 of the outer shell manhole 120. When the outer shell manhole 120 is opened, the shielding member 130 separates the inner-and-outer shells inter-space region 103 which is set in a vacuum state and outside air from each other, and suppresses heat input to the inner shell manhole 110 from the outer shell manhole 120 by heat conduction.

The shielding member 130 has: one end 131 which is fixed to the outer surface of the inner shell manhole barrel portion 111; the other end 132 which is fixed to the inner surface of the outer shell manhole barrel portion 121; and a connecting portion 133 which extends between the one end 131 and the other end 132 and has at least one bent portion 133a. The shielding member 130 has a plate thickness t2 smaller than a plate thickness t1 of members for forming the outer shell manhole barrel portion 121 and the inner shell manhole barrel portion 111. In this embodiment, the shielding member 130 is formed of a bellows.

Fig. 2 and the like show an example of the shielding member 130 where the bent portion 133a has a U-shape, and respective connecting portions 133 which are connected to the bent portion 133a are arranged parallel to each other. However, a shape of the bent portion 133a is not limited to the U-shape. For example, the bent portion 133a may have a V-shape, and the respective connecting portions 133 which are connected to the bent portion 133a may not be arranged parallel to each other.

In this embodiment, as shown in Fig. 2, a doubling plate 126 is provided at a joint portion between the outer shell 102 and the outer shell manhole 120. The doubling plate 126 is provided for facilitating the mounting of the outer shell manhole 120 on the outer shell 102 and for shielding radiant heat which intends to directly intrude the inner shell 101 from the shielding member 130 along the vertical direction 2. Accordingly, as shown in Fig. 2, an opening is formed in the doubling plate 126 to an extent that a sufficient region of the doubling plate 126 which faces the connecting portion 133 of the shielding member 130 in the vertical direction 2 exists.

As described above, by arranging the whole inner shell manhole 110 in the inside of the outer shell manhole barrel portion 121 and by disposing the shielding member 130 between the inner shell manhole barrel portion 111 and the outer shell manhole barrel portion 121, the blind plate 113 of the inner shell manhole 110 and the blind plate 123 of the outer shell manhole 120 are positioned above the shielding member 130 in the vertical direction 2. Accordingly, a region where a pressure becomes an atmospheric pressure by removing the blind plate 123 of the outer shell manhole 120 when the maintenance and inspection of the submerged pump 104 is performed becomes only an atmospheric pressure open region 125 ranging from the blind plate 123 of the outer shell manhole 120 to the shielding member 130. Accordingly, the inner-and-outer shells inter-space region 103 can be maintained in the vacuum state. The atmospheric pressure open region 125 is brought into a vacuum state by the vacuum pump 106 through the vacuum port 124 formed in the outer shell manhole 120 after mounting the blind plate 113 and the blind plate 123.

As another function of the shielding member 130, the shielding member 130 suppresses heat input to the liquefied gas 1 stored in the inner shell manhole 110, that is, in the inner shell 101. As described by the following formula 1, an amount of heat input can be controlled based on a material of the shielding member 130, and a length and a plate thickness of the connecting portion 133.

$$Q = (\lambda/L) \times A \times \Delta T \ldots \text{formula 1}$$

Here, Q denotes a total heat input amount (W) during a transport period of a liquefied gas, $\lambda$ denotes a thermal conductivity (W/mK) of the material of the shielding member 130, L denotes a total length (mm) of the connecting portion 133, A denotes a cross-sectional area (mm$^2$) of the connecting portion 133, and $\Delta T$ denotes a temperature gradient (K).

In this manner, the shielding member 130 used in the transport container for a liquefied gas 100 can be designed corresponding to a permissible amount of heat input to the liquefied gas 1 stored in the inner shell manhole 110, that is, in the inner shell 101 from the outside and hence, the degree of freedom in designing the shielding member 130 can be increased. On the other hand, it is also possible to control an amount of heat input by designing the shielding member 130.

The length of the connecting portion 133 is used as one of parameters relating to the amount of heat input. Although Fig. 2 shows an example where the shielding member 130 includes a single bent portion 133a, the shielding member 130 may include a plurality of bent portions 133a so as to increase the length of the connecting portion 133. Further, the bent portion 133a may be formed of a folded back portion.

That is, by forming the shielding member 130 using a flexible member, a heat transfer distance between the outer shell manhole 120 and the inner shell manhole 110 can be increased and hence, the amount of heat input to the inside of the transport container for a liquefied gas from the outside can be decreased.

As one example of the shielding member 130, assuming that the amount of heat input Q is 2W, when the material for forming the shielding member 130 is stainless steel, the total length L of the connecting portion 133 is at least approximately 1.6 m when the plate thickness t of the connecting portion 133 is 0.5 mm, and the total length L of the connecting portion 133 is at least approximately 3.3 m when the plate thickness t of the connecting portion 133 is 1 mm.

Fig. 2 illustrates the example where the connecting portion 133 is arranged with the bent portion 133a oriented downward in the vertical direction 2. However, the manner of arrangement of the connecting portion 133 is not limited to the above, and the connecting portion 133 may be arranged with the bent portion 133a oriented upward.

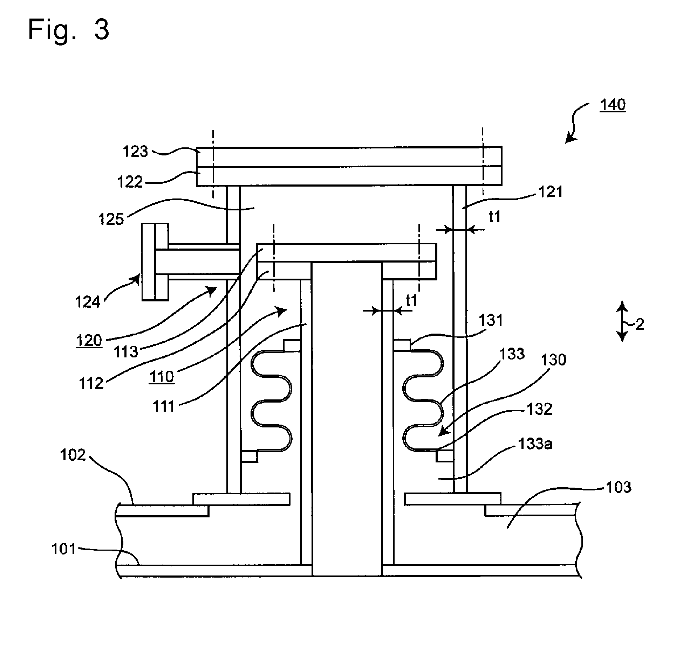

From a viewpoint of facilitating the manufacture of the manhole 140, as shown in Fig. 2, it is preferable that one end 131 and the other end 132 of the shielding member 130 are arranged at the same level in the vertical direction 2. However, the manner of arrangement of the shielding member 130 is not limited to the above. As shown in Fig. 3, one end 131 and the other end 132 of the shielding member 130 may be arranged at different levels in the vertical direction 2.

In short, it is sufficient that the shielding member 130 is designed in conformity with the above-mentioned formula 1, and the number of bent portions 133a, the orientation of the bent portion 133a, a shape of the shielding member 130 and the like are not limited. However, as shown in the formula 1, the amount of heat input is proportional to the thermal conductivity of the shielding member 130. Accordingly, by using a material with the thermal conductivity as small as possible, the total length of the connecting portion 133 can be decreased, so that it is possible to suppress an unnecessary increase especially in height of the manhole 140.

Further, the shielding member 130 has at least one bent portion 133a and hence, the shielding member 130 has flexibility. Accordingly, the shielding member 130 can absorb the displacement caused by the thermal shrinkage of the inner shell 101 and the thermal shrinkage of the outer shell 102 as well as the displacement caused by shaking of the inner shell 101 and the outer shell 102. The displacement of the inner shell 101 and the outer shell 102 can be absorbed by the shielding member 130 in this manner and hence, it is possible to enhance the degree of freedom in designing the support structure of the inner shell 101 with respect to the outer shell 102.

Next, the liquefied gas transport operation by the transport container for a liquefied gas 100 having the above-mentioned constitution will be described.

Before the liquefied gas 1 to be transported is poured into the inner shell 101, air in the inner-and-outer shells inter-space region 103 defined between the inner shell 101 and the outer shell 102 is evacuated by the vacuum pump 106 disposed outside the outer shell 102 so that the inner-and-outer shells inter-space region 103 is brought into a vacuum state. At this stage of operation, in the manhole 140, outside air and the inner-and-outer shells inter-space region 103 are shielded and separated from each other by the shielding member 130. Usually, the blind plate 113 is mounted on the inner shell manhole 110 and the blind plate 123 is mounted on the outer shell manhole 120. Accordingly, air in the atmospheric pressure open region 125 is also evacuated by the vacuum pump 106 through the vacuum port 124 in the outer shell manhole 120 so that the atmospheric pressure open region 125 is also brought into a vacuum state.

In a state where at least the inner-and-outer shells inter-space region 103 is brought into the vacuum state, the liquefied gas 1 to be transported is poured into the inside of the inner shell 101 from the outside through the tank dome 105. After pouring the liquefied gas 1 into the inside of the inner shell 101, the liquefied gas 1 is transported to a destination port by the liquefied gas carrying vessel.

During the transport period, at the place of the manhole 140, heat is intruded into the inner shell manhole 110, the inner shell 101, and lastly the liquefied gas 1 from the outer shell manhole 120 through the shielding member 130. In this case, however, an amount of heat input is less than or equal to an allowable amount set by designing, so that the amount of heat input is not an amount which affects an evaporation loss of the loaded liquefied gas 1. Further, the shielding member 130 can absorb the relative displacement between the inner shell 101 and the outer shell 102 which may be caused by the thermal shrinkage, the shaking and the like during the transport.

After the liquefied gas carrying vessel arrives at the destination port, the liquefied gas 1 is unloaded through the tank dome 105 by the submerged pump 104 disposed in the inside of the inner shell 101.

On the other hand, in the maintenance and inspection of the submerged pump 104, all liquefied gas 1 in the inner shell 101 is discharged, and the inside of the inner shell 101 is replaced with air through the tank dome 105. As subsequent steps, firstly, the atmospheric pressure open region 125 is opened to outside air through the vacuum port 124 or by removing the blind plate 123 of the outer shell manhole 120. At this stage of operation, as has been described previously, the inner-and-outer shells inter-space region 103 is maintained in the vacuum state by the shielding member 130.

Next, the blind plate 113 of the inner shell manhole 110 is removed. Then, the operator can enter into the inside of the inner shell 101 through the opening at the flange 122 of the outer shell manhole 120 and the opening at the flange 112 of the inner shell manhole 110.

After the maintenance and inspection of the submerged pump 104 is completed, the blind plate 113 of the inner shell manhole 110 and the blind plate 123 of the outer shell manhole 120 are sequentially fastened to the flange 112 and the flange 122 respectively. Then, air in the atmospheric pressure open region 125 is evacuated by the vacuum pump 106 through the vacuum port 124 so that the atmospheric pressure open region 125 is brought into the vacuum state. The volume of the atmospheric pressure open region 125 is extremely small compared with the volume of the inner-and-outer shells inter-space region 103 and hence, the atmospheric pressure open region 125 can be returned to the vacuum state within a short time.

As described above, according to the transport container for a liquefied gas 100 of this embodiment, the transport container for a liquefied gas 100 can be used again in service after a lapse of the short time from the maintenance and inspection of the submerged pump 104.

In the description made heretofore, a method which uses the submerged pump 104 is described as the method of unloading the liquefied gas 1. However, the transport container for a liquefied gas 100 of this embodiment can unload the liquefied gas by a self-pressurization way without using the submerged pump 104 or by the combination of the self-pressurization way and the submerged pump 104. Here, the self-pressurization way means a method for unloading the liquefied gas 1 by increasing a pressure of the inside of the inner shell 101 by forcibly heating the liquefied gas 1 within the inner shell 101 from the outside and then evaporating it.

It is to be noted that, by properly combining the arbitrary modifications in the aforementioned embodiment, the effects possessed by them can be produced.

Although the present invention has been sufficiently described in conjunction with the preferred embodiment by reference to attached drawings, it is apparent that various modifications and variations are conceivable to those who are skilled in the art. It should be construed that such modifications and variations are included within the scope of the present invention described in attached Claims unless they depart therefrom.

Further, Japanese Patent Application No. 2012-276563 filed on December 19, 2012 is incorporated herein by reference, in the entirety of the disclosures of the specification, the drawings, the claims and the abstract.

INDUSTRIAL APPLICABILITY

The present invention is applicable to a transport container for a liquefied gas, specifically to a transport container for a liquefied gas used for marine transport of a liquefied gas.

DESCRIPTION OF REFERENCE SIGNS

1: liquefied gas
2: vertical direction
100: transport container for a liquefied gas
100a: upper portion
101: inner shell
101a: bottom portion
102: outer shell
103: inner-and-outer shells inter-space region
104: submerged pump
110: inner shell manhole
111: inner shell manhole barrel portion
120: outer shell manhole
121: outer shell manhole barrel portion
130: shielding member
131: one end
132: the other end
133: connecting portion
133a: bent portion
140: manhole

**Claims**

1.  A transport container for a liquefied gas mounted on a liquefied gas carrying vessel and storing the liquefied gas having a boiling point lower than a condensing temperature of air therein, the transport container for a liquefied gas comprising:

    an inner shell configured to store the liquefied gas therein;
    an outer shell configured to surround the inner shell;
    an inner-and-outer shells inter-space region configured to constitute a vacuum heat insulation layer formed between the inner shell and the outer shell;
    a submerged pump fixed to a bottom portion within the inner shell in a vertical direction and configured to discharge the liquefied gas to the outside of the outer shell; and
    a manhole for maintenance and inspection of the submerged pump, the manhole mounted on an upper portion of the transport container for a liquefied gas in the vertical direction, and configured to make the outside of the outer shell and the inside of the inner shell communicate with each other.

2.  The transport container for a liquefied gas according to claim 1, wherein the manhole includes a shielding member configured to separate the inner-and-outer shells inter-space region and outside air from each other at the time of opening the manhole, and suppress a heat input to the inner shell from the outer shell.

3.  The transport container for a liquefied gas according to claim 2, wherein
    the manhole includes:

    an inner shell manhole mounted on an upper portion of the inner shell in the vertical direction, and
    an outer shell manhole surrounding an outer side of the inner shell manhole and mounted on an upper portion of the outer shell in the vertical direction, and
    the shielding member is a flexible member and is disposed between an inner shell manhole barrel portion of the inner shell manhole and an outer shell manhole barrel portion of the outer shell manhole.

4.  The transport container for a liquefied gas according to claim 3, wherein
    the shielding member has: one end fixed to the inner shell manhole barrel portion; the other end fixed to the outer shell manhole barrel portion; and a connecting portion extending between the one end and the other end and having at least one bent portion, the shielding member having a plate thickness smaller than plate thicknesses of members for forming the outer shell manhole barrel portion and the inner shell manhole barrel portion respectively.

5.  The transport container for a liquefied gas according to any one of claims 2 to 4, wherein
    the shielding member is configured to be designed using a following formula,

$$Q = (\lambda/L) \times A \times \Delta T$$

wherein Q denotes a total heat input amount (W) during a transport period of a liquefied gas, $\lambda$ denotes a thermal conductivity (W/mK) of a material for forming the shielding member, L denotes a total length (mm) of the connecting portion, A denotes a cross-sectional area (mm$^2$) of the connecting portion, and $\Delta T$ denotes a temperature gradient (K).

Fig. 1

Fig. 2

Fig. 3

## INTERNATIONAL SEARCH REPORT

| International application No. |
| --- |
| PCT/JP2013/083418 |

A. CLASSIFICATION OF SUBJECT MATTER
*B65D90/10*(2006.01)i, *B65D88/06*(2006.01)i, *F17C13/02*(2006.01)i

According to International Patent Classification (IPC) or to both national classification and IPC

B. FIELDS SEARCHED

Minimum documentation searched (classification system followed by classification symbols)
B65D90/10, B65D88/06, F17C13/02

Documentation searched other than minimum documentation to the extent that such documents are included in the fields searched
Jitsuyo Shinan Koho        1922-1996   Jitsuyo Shinan Toroku Koho    1996-2014
Kokai Jitsuyo Shinan Koho   1971-2014   Toroku Jitsuyo Shinan Koho    1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 08-159391 A  (Ishikawajima-Harima Heavy Industries Co., Ltd.),<br>21 June 1996 (21.06.1996),<br>paragraphs [0009] to [0016]; fig. 1 to 3<br>(Family: none) | 1<br>2-5 |
| Y<br>A | Microfilm of the specification and drawings annexed to the request of Japanese Utility Model Application No. 023183/1990(Laid-open No. 115300/1991)<br>(Ishii Iron Works Co., Ltd.),<br>28 November 1991 (28.11.1991),<br>specification, page 5, line 14 to page 8, line 8; fig. 1 to 3<br>(Family: none) | 1<br>2-5 |

| ☒ Further documents are listed in the continuation of Box C. | ☐ See patent family annex. |
| --- | --- |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>     05 February, 2014 (05.02.14) | Date of mailing of the international search report<br>     18 February, 2014 (18.02.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/083418 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 48-089411 A  (Hitachi, Ltd.),<br>22 November 1973 (22.11.1973),<br>page 2, upper left column, line 2 to page 3,<br>upper right column, line 16; fig. 1 to 10<br>(Family: none) | 1<br>2-5 |
| A | Microfilm of the specification and drawings<br>annexed to the request of Japanese Utility<br>Model Application No. 103771/1986(Laid-open<br>No. 009600/1988)<br>(Ishikawajima-Harima Heavy Industries Co.,<br>Ltd.),<br>22 January 1988 (22.01.1988),<br>entire text; fig. 1 to 2<br>(Family: none) | 1-5 |
| A | Microfilm of the specification and drawings<br>annexed to the request of Japanese Utility<br>Model Application No. 035850/1986(Laid-open<br>No. 147800/1987)<br>(Ishikawajima-Harima Heavy Industries Co.,<br>Ltd.),<br>18 September 1987 (18.09.1987),<br>entire text; fig. 1 to 3<br>(Family: none) | 1-5 |
| A | Microfilm of the specification and drawings<br>annexed to the request of Japanese Utility<br>Model Application No. 102538/1984(Laid-open<br>No. 019592/1986)<br>(Ishikawajima-Harima Heavy Industries Co.,<br>Ltd.),<br>04 February 1986 (04.02.1986),<br>entire text; all drawings<br>(Family: none) | 1-5 |
| A | JP 37-004462 B1  (ACF Industries, Inc.),<br>14 June 1962 (14.06.1962),<br>page 6, left column, line 41 to right column,<br>line 1<br>(Family: none) | 1-5 |
| A | JP 60-245899 A  (Hitachi, Ltd.),<br>05 December 1985 (05.12.1985),<br>page 2, lower left column, line 17 to page 3,<br>upper left column, line 14<br>(Family: none) | 5 |
| A | US 1978608 A  (A.O. SMITH CORP.),<br>30 October 1934 (30.10.1934),<br>entire text; fig. 1 to 2<br>(Family: none) | 1-5 |

Form PCT/ISA/210 (continuation of second sheet) (July 2009)

**INTERNATIONAL SEARCH REPORT**

| International application No. |
| --- |
| PCT/JP2013/083418 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | DE 102010018301 A1 (LURGI GMBH), 27 October 2011 (27.10.2011), entire text; fig. 2 (Family: none) | 1-5 |

Form PCT/ISA/210 (continuation of second sheet) (July 2009)

**EP 2 937 297 A1**

**Patent documents cited in the description**

- JP 2012183864 A

- JP 2012276563 A